# EUROPÄISCHE PATENTSCHRIFT

(11) **EP 3 820 105 B1**
(45) Veröffentlichungstag und Bekanntmachung des Hinweises auf die Patenterteilung: **15.03.2023**
(21) Anmeldenummer: 19208307.9
(22) Anmeldetag: 11.11.2019
(51) Int. Cl.: H04L 9/40, G05B 19/418, H04L 9/32, G06F 1/12, G06F 1/14, H04L 69/28

(54) **VERFAHREN UND SYSTEM ZUR SICHEREN ZEITSYNCHRONISATION**
METHOD AND SYSTEM FOR SECURE TIME SYNCHRONIZATION
PROCÉDÉ ET SYSTÈME DE SYNCHRONISATION TEMPORELLE SÉCURISÉE

(43) Veröffentlichungstag der Anmeldung: 12.05.2021
(73) Patentinhaber: Siemens Aktiengesellschaft, 80333 München (DE)
(72) Erfinder: Balduf, Jochen, 76707 Hambrücken (DE); Palmin, Anna, 76187 Karlsruhe (DE)
(74) Vertreter: Siemens Patent Attorneys

(56) Entgegenhaltungen:
- EP-A1- 3 402 152
- WO-A1-2015/049138
- MILLS U DELAWARE J MARTIN D ET AL: "Network Time Protocol Version 4: Protocol and Algorithms Specification; rfc5905.txt", NETWORK TIME PROTOCOL VERSION 4: PROTOCOL AND ALGORITHMS SPECIFICATION; RFC5905.TXT, INTERNET ENGINEERING TASK FORCE, IETF; STANDARD, INTERNET SOCIETY (ISOC) 4, RUE DES FALAISES CH- 1205 GENEVA, SWITZERLAND, 21. Juni 2010 (2010-06-21), Seiten 1-110, XP015070844, [gefunden am 2010-06-21]

## Beschreibung

Die vorliegende Erfindung betrifft ein Verfahren zur sicheren Zeitsynchronisation in einer industriellen Anlage sowie ein entsprechendes System.

Verfahrenstechnische Anlagen wie etwa Raffinerien oder Fabriken (in denen z. B. Stoffe hinsichtlich Zusammensetzung, Art oder Eigenschaft verändert werden) wie auch fertigungstechnische Anlagen (in denen z. B. komplexe Geräte oder Autos gefertigt werden) können äußerst komplexe Strukturen aufweisen. Solche industriellen Anlagen können sich beispielsweise aus einer Vielzahl an, gegebenenfalls miteinander vernetzten und/oder voneinander abhängigen, Komponenten wie etwa Aktuatoren, Sensoren und/oder dergleichen zusammensetzen.

Um den Betrieb dieser Komponenten zu regulieren, insbesondere die (rechnergestützte) Kommunikation zwischen den Komponenten abzusichern, werden üblicherweise (digitale) Zertifikate verwendet, welche innerhalb eines entsprechenden Engineering- und/oder Runtime-Systems ausgestellt, verteilt und geprüft werden können. Mithilfe von den Zertifikaten zugeordneten Schlüsseln können verschickte Nachrichten verschlüsselt und/oder signiert werden. Ein solches System kann beispielsweise eine sog. Public-Key-Infrastruktur (PKI) nutzen. Ohne gültige, d. h. von einem Zertifizierungsdienst ausgestellte, Zertifikate können die Komponenten nicht oder nur eingeschränkt betrieben werden, also z. B. nicht auf sichere Weise mit anderen Komponenten kommunizieren.

Um ein Zertifikatsmanagement bzw. ein solches System zuverlässig betreiben zu können, ist es üblicherweise notwendig, die Systemzeiten der verschiedenen Kommunikationsteilnehmer zu synchronisieren, da z. B. die Prüfung ausgestellter Zertifikate auf der Systemzeit basiert.

Zugleich sollte diese Synchronisation geschützt sein, um die (unbemerkte) Änderung bzw. Manipulation einer Systemzeit eines Kommunikationsteilnehmers durch Dritte zu unterbinden oder zumindest zu erschweren. Andernfalls könnten durch eine solche Manipulation beispielsweise auch bereits abgelaufene Zertifikate genutzt bzw. missbraucht werden. Damit würde die Sicherheit des Kommunikationsnetzwerks kompromittiert.

Zur Zeitsynchronisation sind dabei verschiedene Standards, zum Beispiel NTP (Network Time Protocol) oder PDP (Precision Time Protocol), bekannt. NTP verwendet das verbindungslose Transportprotokoll UDP und kann in paketbasierten Kommunikationsnetzwerken eingesetzt werden. Es wurde speziell entwickelt, um eine zuverlässige Zeitangabe in Netzwerken mit variabler Paketlaufzeit zu ermöglichen. Allerdings werden gemäß des NTP-Standards übermittelte Nachrichten ohne jeglichen Integritätsschutz übertragen, wodurch Manipulationen möglich sind.

Dieser Nachteil von NTP wird durch den Standard Secure NTP (Secure Network Time Protocol) behoben, bei dem Zeitstempel zwischen den Kommunikationsteilnehmern mit einer kryptographische Hashfunktion (MD5) gesichert übertragen werden. Allerdings werden hierzu symmetrische Schlüssel verwendet, die zuvor zwischen den Kommunikationsteilnehmern ausgetauscht und sicher hinterlegt werden müssen. Eine sichere Realisierung des Austauschs und der Speicherung dieser Schlüssel ist in einer industriellen Anlage, insbesondere mit einer Vielzahl von Anlagenkomponenten, sehr aufwändig.

In der WO 2015/049138 A1 sind ein Verfahren und ein dazugehöriges System zur sicheren Übertragung von Zeitsynchronisationspaketen eines Masterknotens in einer Netzwerkumgebung offenbart.

In der Veröffentlichung "MILLS U DELAWARE J MARTIN D ET AL: "Network Time Protocol Version 4: Protocol and Algorithms Specification; rfc5905.txt", NETWORK TIME PROTOCOL VERSION 4: PROTOCOL AND ALGORITHMS SPECIFICATION; RFC5905.TXT, INTERNET ENGINEERING TASK FORCE, IETF; STANDARD, INTERNET SOCIETY (ISOC) 4, RUE DES FALAISES CH- 1205 GENEVA, SWITZERLAND, 21. Juni 2010 (2010-06-21), Seiten 1-110, XP015070844, Seite 16 - Seite 23" wird das "Network Time Protocol (NTP)" beschrieben, welches zur Synchronisation von Computersystemzeiten im Internet verwendet wird.

Es ist daher eine Aufgabe der vorliegenden Erfindung, die Zeitsynchronisation in einer industriellen Anlage zu verbessern, insbesondere einfacher und/oder sicherer zu machen.

Diese Aufgabe wird gelöst durch ein Verfahren zur Zeitsynchronisation in einer industriellen Anlage sowie ein entsprechendes System gemäß den unabhängigen Ansprüchen.

Ein Verfahren zur sicheren Zeitsynchronisation in einer industriellen Anlage gemäß einem ersten Aspekt der Erfindung weist die folgenden Schritte auf: (i) Übermitteln einer Synchronisierungsanfrage einer Anlagenkomponente an einen Registrierungsdienst eines Zertifikatsmanagements der Anlage, wobei die Synchronisierungsanfrage eine Signatur der anfragenden Anlagenkomponente umfasst; (ii) Prüfen der Synchronisierungsanfrage, insbesondere auf deren Authentizität, durch den Registrierungsdienst; (iii) Übermitteln einer Synchronisierungsrückmeldung an die anfragende Anlagenkomponente in Abhängigkeit eines Ergebnisses der Prüfung; und (iv) Anpassen einer Systemzeit der Anlagenkomponente an eine Systemzeit des Registrierungsdiensts anhand der Synchronisierungsrückmeldung.

Ein Registrierungsdienst (Registration Authority, kurz RA) eines Zertifikatsmanagements einer industriellen Anlage im Sinne der Erfindung ist insbesondere ein Dienst, der dazu eingerichtet ist, Zertifikatsanträge von Anlagenkomponenten zu empfangen. Vorzugsweise ist der Registrierungsdienst dabei dazu eingerichtet, einen eingehenden Zertifikatsantrag (auf Authentizität, zum Beispiel anhand einer Signatur der antragstellenden Anlagenkomponente) zu prüfen und, in Abhängigkeit eines Ergebnisses der Prüfung, an einen Zertifizierungsdienst (Certification Authority, kurz CA) weiterzuleiten, welcher der antragstellenden Anlagenkomponente ein Zertifikat ausstellt.

Eine Anlagenkomponente im Sinne der Erfindung ist insbesondere eine physische oder als Software realisierte Komponente der industriellen Anlage. Eine Anlagenkomponente kann beispielsweise ein Gerät oder eine Applikation, die z. B. als Software auf einem Server der Anlage läuft, sein.

Eine Zeitsynchronisation im Sinne der Erfindung ist insbesondere das Abgleichen bzw. Anpassen von Systemzeiten verschiedener Komponenten, so dass bei einer Zeitabfrage bezüglich dieser Komponenten z. B. die gleichen Zeitstempel erzeugt bzw. Uhrzeiten geliefert werden. Zeitsynchronisation kann insbesondere eine Synchronisation von (System-)Uhren der Anlagenkomponenten sein, wobei eine solche (System-)Uhr ein absoluter oder relativer Zeitmesser zum Ermitteln bzw. Ausgeben der Systemzeit, also z. B. der für die betreffende Komponente gültigen Uhrzeit, sein kann. Eine Synchronisation verschiedener Systemzeiten kann in diesem Sinne daher auch die Synchronisation verschiedener (System-)Uhren sein.

Ein Aspekt der Erfindung basiert auf dem Ansatz, zur Synchronisation von Systemzeiten der Anlagenkomponenten einer industriellen Anlage ein Zertifikatsmanagementsystem, z. B. eine Public-Key-Infrastruktur (PKI), zu nutzen. Da Zertifikate üblicherweise abgesichert verwaltet werden, d. h. Nachrichten gemäß einem entsprechenden Zertifikatsmanagement-(Kommunikations-)Protokoll zum Beispiel mithilfe eines Schlüssels signiert werden, können auf diese Weise auch Nachrichten zur Zeitsynchronisation, wie beispielsweise Synchronisierungsanfragen und/oder Synchronisierungsrückmeldungen, abgesichert werden. Dabei kann darauf verzichtet werden, zusätzliche Schlüssel alleine zum Zwecke der Zeitsynchronisation an die Anlagenkomponenten zu übermitteln und/oder dort zu hinterlegen, wodurch eine Verringerung des Implementierungsaufwands erzielt werden kann. Vorzugsweise wird stattdessen ein Standard zur Zeitsynchronisation wie NTP in das Zertifikatsmanagementsystem, insbesondere in ein entsprechendes Zertifikatsmanagementprotokoll wie z. B. CMP, integriert. Somit ist es möglich, die Zertifikate und Schlüssel zur Zeitsynchronisation zu verwenden, auf die zum Zwecke des Zertifikatsmanagements ohnehin zurückgegriffen wird.

In bevorzugter Weise wird daher wenigstens eine Nachricht, mit der die Zeitsynchronisierung angefragt wird, von einer Anlagenkomponente an einen Registrierungsdienst, der Teil des Zertifikatsmanagements der Anlage ist, übermittelt. Diese Synchronisierungsanfrage kann dabei gemäß dem Zertifikatsmanagementprotokoll übermittelt werden, d. h. gemäß dem Kommunikationsprotokoll, auf dessen Grundlage auch Zertifikatsanträge von den Anlagenkomponenten an den Registrierungsdienst übermittelt werden.

In diesem Sinne ist es insbesondere denkbar, dass ein Zertifikatsmanagementprotokoll modifiziert bzw. ein modifiziertes Zertifikatsmanagementprotokoll verwendet wird, wobei die Modifikation die Übermittlung solcher Nachrichten zur Zeitsynchronisation ermöglicht.

Der Registrierungsdienst kann die Synchronisierungsanfrage dann analog zu einem Zertifikatsantrag, insbesondere anhand einer Signatur der anfragenden Anlagenkomponente, zum Beispiel auf Authentizität prüfen. Ergibt die Prüfung, dass die Synchronisierungsanfrage authentisch ist, d. h. zum Beispiel nicht manipuliert wurde und/oder von einer bekannten bzw. registrierten Anlagenkomponente übermittelt wurde, sendet der Registrierungsdienst in bevorzugter Weise eine Synchronisierungsrückmeldung an die anfragende Anlagenkomponente, auf deren Grundlage die Systemzeit der Anlagenkomponente an eine Systemzeit des Registrierungsdiensts angepasst werden kann.

Sowohl die Synchronisierungsanfrage als auch die Synchronisierungsrückmeldung können dabei jeweils eine oder mehrere Nachrichten enthalten, die vorzugsweise gemäß dem Zertifikatsmanagementprotokoll übermittelt werden und/oder aufgebaut sind, d. h. zum Beispiel eine Signatur des Senders umfassen.

Die Synchronisierungsanfrage und/oder -rückmeldung weisen vorzugsweise jeweils wenigstens einen Zeitstempel auf. Ein solcher Zeitstempel gibt in bevorzugter Weise die Systemzeit der anfragenden Anlagenkomponente bzw. des Registrierungsdiensts an, und zwar insbesondere zum Zeitpunkt des Versendens der Synchronisierungsanfrage und/oder -rückmeldung bzw. der in ihnen enthaltenen Nachrichten. Auf Grundlage des mindestens einen Zeitstempels der Synchronisierungsrückmeldung kann dann die Zeitsynchronisation durchgeführt werden.

Dabei ist es denkbar, dass die Synchronisierungsanfrage und/oder -rückmeldung mehrere verschiedene, unterschiedlichen Zeitpunkten zugeordnete Zeitstempel aufweisen. So kann ein weiterer Zeitstempel der Synchronisierungsrückmeldung zum Beispiel den Zeitpunkt, zu dem die Synchronisierungsanfrage empfangen wurde, angeben. Aus solchen Zeitstempeln kann insbesondere die Übertragungszeit (die sogenannte Latenz) der Synchronisierungsanfrage und/oder -rückmeldung und/oder eine Zeitabweichung (der sogenannte Offset) zwischen der Systemzeit des Registrierungsdiensts und der Systemzeit der Anlagenkomponente ermittelt und bei der Anpassung der Systemzeit der Anlagenkomponente berücksichtigt werden.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform umfasst die Synchronisierungsanfrage eine Signatur der anfragenden Anlagenkomponente. Vorzugsweise überprüft der Registrierungsdienst die Synchronisierungsanfrage auf Grundlage dieser Signatur, insbesondere auf Authentizität. Mithilfe der Signatur kann der Registrierungsdienst insbesondere überprüfen, ob die Synchronisierungsanfrage tatsächlich von der anfragenden Anlagenkomponente übermittelt wurde und/oder ob die Synchronisierungsanfrage im Rahmen des Übermittlungsvorgangs manipuliert wurde. Dies ermöglicht eine zuverlässige Absicherung der Synchronisierungsanfrage, wobei gleichzeitig der zusätzliche Kommunikationsaufwand gering gehalten wird.

In einer weiteren bevorzugten Ausführungsform erzeugt die anfragende Anlagenkomponente die Signatur mithilfe eines Schlüssels aus einer Public-Key-Infrastruktur. Der Schlüssel ist dabei vorzugsweise einem Zertifikat, zum Beispiel einem Herstellerzertifikat (Manufacturer Certificate) oder einem während der Inbetriebnahme ausgestellten kundenspezifischen Zertifikat oder einem im Betrieb für einen dedizierten Verwendungszweck ausgestellten operativen Zertifikat (Operational Certificate) zugeordnet, anhand dem die Authentizität des Schlüssels bzw. der damit erzeugten Signatur überprüfbar ist. Die Zeitsynchronisation kann so besonders nahtlos in das Zertifikatsmanagement integriert werden.

In einer weiteren bevorzugten Ausführungsform wird bei einer erstmaligen Synchronisierungsanfrage eine vordefinierte Anzahl an Anfragenachrichten und bei einer entsprechenden Synchronisierungsrückmeldung eine entsprechende Anzahl an Rückmeldenachrichten übermittelt. Vorzugsweise wird die Anpassung der Systemzeit der Anlagenkomponente an die Systemzeit des Registrierungsdiensts auf Grundlage der mehreren Rückmeldenachrichten durchgeführt. Dabei können die Rückmeldenachrichten auch Information bezüglich der bzw. aus den Anfragenachrichten enthalten, zum Beispiel in den Anfragenachrichten enthaltene Zeitstempel. Mithilfe der vordefinierten Anzahl an Rückmeldenachrichten - und gegebenenfalls auch Anfragenachrichten - kann eine ausreichend genaue Zeitsynchronisation erzielt werden.

So ist es zum Beispiel denkbar, dass in jeder Rückmeldenachricht enthaltene Zeitstempel zum Ermitteln einer mittleren Übertragungszeit (Latenz) und/oder einer mittleren Zeitabweichung (Offset) zwischen der Systemzeit der Anlagenkomponente und der Systemzeit des Registrierungsdiensts verwendet werden. Beim erstmaligen Synchronisieren der Systemzeiten, zum Beispiel bei Inbetriebnahme der Anlagenkomponente, kann somit die Zuverlässigkeit erhöht werden, selbst wenn dabei die Kommunikationskanäle der industriellen Anlage stark beansprucht sind.

Gemäß dem, gegebenenfalls modifizierten, Zertifikatsmanagementprotokoll kann es dabei insbesondere vorgesehen bzw. definiert sein, dass beim erstmaligen Anfragen einer Zeitsynchronisation durch die Anlagenkomponente automatisch die vordefinierte Anzahl an Anfragenachrichten an den Registrierungsdienst übermittelt wird. Vorzugsweise ist entsprechend definiert, das als Antwort auf jede der Anfragenachrichten jeweils eine Rückmeldenachricht an die anfragende Anlagenkomponente übermittelt wird. Somit können zur (erstmaligen) Synchronisierung automatisch mehrere Abstimmungen zwischen den betroffenen Systemzeiten vorgenommen werden.

In aufwändigen Tests hat sich gezeigt, dass eine Übermittlung von sechs Anfrage- bzw. Rückmeldenachrichten vorteilhaft in Bezug auf die Genauigkeit der (erstmaligen) Zeitsynchronisation ist. Je nach Übertragungsdauer und/oder benötigter Genauigkeit bei der Synchronisierung kann aber auch eine andere Anzahl an Anfrage- bzw. Rückmeldenachrichten gewählt werden.

In einer weiteren bevorzugten Ausführungsform wird die erstmalige Synchronisierung bei Inbetriebnahme der Anlagenkomponente innerhalb der industriellen Anlage, insbesondere im Rahmen der Beantragung eines Zertifikats, angefragt. Die erstmalige Zeitsynchronisation kann beispielsweise durchgeführt werden, wenn eine Anlagenkomponente ausgetauscht oder neu in die Anlage integriert wurde und daher neue bzw. aktualisierte Zertifikate benötigt. Dadurch kann sichergestellt werden, dass die Systemzeit der Anlagenkomponente beim erstmaligen (und bei Bedarf auch bei weiterem) Ausstellen von Zertifikaten mit der Systemzeit des Registrierungsdiensts synchronisiert ist.

In einer weiteren bevorzugten Ausführungsform umfassen die Anfragenachrichten jeweils eine Signatur der anfragenden Anlagenkomponente. Vorzugsweise erzeugt die anfragende Anlagenkomponente die Signaturen dabei mithilfe eines einem Herstellergerätezertifikat oder einem Kundengerätezertifikat zugeordneten privaten Schlüssels. Ein solches Herstellergerätezertifikat oder Kundengerätezertifikat wird vorzugsweise bereits im Rahmen der Fertigung in der Anlagenkomponente hinterlegt. Dadurch kann auch die erstmalige Zeitsynchronisation abgesichert werden, ohne dass zuvor eine aufwändige (sichere) Übermittlung eines entsprechenden Schlüssels notwendig ist.

Alternativ oder zusätzlich ist es auch denkbar, dass die Signaturen mithilfe eines Schlüssels erzeugt werden, der einem anderen, mit dem Herstellergerätezertifikat oder Kundengerätezertifikat vergleichbaren (gleichwertigem) Zertifikat zugeordnet ist. Beispielsweise ist es denkbar, dass zu diesem Zweck ein vom Anlagenbetreiber/Integrator/OEM ausgestelltes Zertifikat verwendet wird.

In einer weiteren bevorzugten Ausführungsform wird die vordefinierte Anzahl an Anfragenachrichten innerhalb eines vordefinierten Zeitraums an den Registrierungsdienst übermittelt. Insbesondere kann vorgesehen sein, dass zwischen dem Übermitteln der mehreren Anfragenachrichten bzw. dem Empfangen der entsprechenden Rückmeldenachrichten jeweils vordefinierte Zeitintervalle liegen. Dadurch kann erreicht werden, dass die Systemzeiten der Anlagenkomponente und des Registrierungsdiensts bei der Ausstellung eines Zertifikats bereits synchronisiert sind.

Vorzugsweise wird der vordefinierte Zeitraum derart gewählt, dass seine Länge die Verwendung der anfragenden Anlagenkomponente, insbesondere deren Inbetriebnahme, nicht signifikant beeinträchtigt, insbesondere verzögert. Zu diesem Zweck kann der vordefinierte Zeitraum beispielsweise 1 Sekunde oder weniger, vorzugsweise 500 ms oder weniger, insbesondere 50 ms oder weniger, betragen.

In einer weiteren bevorzugten Ausführungsform wird bei einer erneuten Synchronisierungsanfrage genau eine Anfragenachricht und bei einer entsprechenden Synchronisierungsrückmeldung genau eine Rückmeldenachricht übermittelt. Eine solche erneute Synchronisierung kann beispielsweise durch die Anlagenkomponente analog zu einer Zertifikats- bzw. Schlüsselerneuerung angefragt werden, um die Synchronizität der Systemzeit der Anlagenkomponente und der Systemzeit des Registrierungsdiensts auch über längere Zeiträume sicherstellen zu können. Da die Systemzeit der Anlagenkomponente hierbei vorzugsweise lediglich "nachgestellt" wird, kann das einmalige Übermitteln einer Anfrage- bzw. Rückmeldenachricht ausreichen, um eine präzise Synchronisation aufrechtzuerhalten.

In einer weiteren bevorzugten Ausführungsform umfasst die Anfragenachricht eine Signatur, wobei die anfragende Anlagenkomponente die Signatur mithilfe eines einem zuletzt ausgestellten operativen Zertifikat zugeordneten Schlüssels erzeugt. Im Betrieb der Anlage bzw. der Anlagenkomponente ist es dadurch möglich, stets einen aktuellen Schlüssel zu verwenden und somit die Absicherung der Zeitsynchronisation aktuell zu halten.

In einer weiteren bevorzugten Ausführungsform wird die Synchronisierungsanfrage erneut vor dem Stellen eines Zertifikaterneuerungsantrags durch die Anlagenkomponente bei einem Zertifizierungsdienst an den Registrierungsdienst übermittelt. Zu diesem Zweck kann das, gegebenenfalls modifizierte, Zertifikatsmanagementprotokoll dazu eingerichtet sein, dass erneute Übermitteln der Synchronisierungsanfrage mit dem Stellen eines Zertifikaterneuerungsantrags zu verknüpfen, insbesondere in diesen zu integrieren. Mit anderen Worten kann gemäß dem, gegebenenfalls modifizierten, Zertifikatsmanagementprotokoll vorgesehen sein, die Synchronisierungsanfrage automatisch erneut zu übermitteln, wenn ein neues Zertifikat beantragt wird. Dadurch kann sichergestellt werden, dass die Systemzeit der Anlagenkomponente bei der Erneuerung eines Zertifikats mit der Systemzeit des Registrierungsdiensts synchronisiert ist.

Alternativ kann die Synchronisierungsanfrage aber auch unabhängig von einem Zertifikats-(Erneuerungs-)Antrag erneut gestellt werden. Insbesondere ist es denkbar, dass Synchronisierungsanfragen (regelmäßig) in vorgegebenen Zeitintervallen übermittelt werden, z. B. um eine dauerhafte Synchronizität der Systemzeiten zu ermöglichen bzw. aufrechtzuerhalten. Vorzugsweise werden auch diese erneuten Synchronisierungsanfragen auf Grundlage des, gegebenenfalls modifizierten, Zertifikatsmanagementprotokolls übermittelt und können durch den Registrierungsdienst z. B. auf Authentizität geprüft werden. In diesem Sinne sind auch die erneuten Synchronisierungsanfragen vor Manipulation geschützt.

In einer weiteren bevorzugten Ausführungsform wird zunächst geprüft, ob die Systemzeit des Registrierungsdiensts und die Systemzeit der Anlagenkomponente synchronisiert sind, wobei die Systemzeit der Anlagenkomponente an die Systemzeit des Registrierungsdiensts in Abhängigkeit eines Ergebnisses der Prüfung angepasst wird. Insbesondere kann geprüft werden, ob oder wie stark die Systemzeit der Anlagenkomponente und die Systemzeit des Registrierungsdiensts voneinander abweichen. Die bei einer solchen Prüfung ermittelte Stärke der Abweichung der Systemzeiten kann bei einer dann folgenden Anpassung berücksichtigt werden.

Um das Kommunikationsaufkommen in der Anlage zu verringern, kann der Prüfung bezüglich der Abweichung die Synchronisierungsanfrage bzw. -rückmeldung zugrunde gelegt werden. Alternativ ist es aber auch denkbar, eine separate Prüfanfrage von der Anlagenkomponente an den Registrierungsdienst und, als Antwort darauf, eine entsprechende separate Prüfrückmeldung vom Registrierungsdienst an die Anlagenkomponente zu übermitteln und die Prüfung auf Grundlage der Prüfrückmeldung bzw. der darin enthaltenen Informationen, gegebenenfalls auch zur Prüfanfrage, durchzuführen. In Abhängigkeit eines Ergebnisses der Prüfung kann dann, insbesondere wenn eine - den Abweichungsschwellenwert gegebenenfalls überschreitende - Abweichung vorliegt, die Synchronisierungsanfrage übermittelt werden.

In einer weiteren bevorzugten Ausführungsform werden die Synchronisierungsanfrage und die Synchronisierungsrückmeldung gemäß dem Zertifikatsmanagementprotokoll CMP übermittelt. CMP (Certificate Management Protocoll) ermöglicht ein flexibles und zuverlässiges Zertifikatsmanagement und kann daher vorteilhaft in industriellen Anlagen eingesetzt werden. Vorzugsweise wird CMP dabei um wenigstens einen Nachrichtentyp zum Zwecke der Zeitsynchronisation erweitert.

Alternativ ist es aber auch denkbar, ein anderes Zertifikatsmanagementprotokoll zu Übermittlung der Synchronisierungsanfrage bzw. -rückmeldung zu verwenden. Beispielsweise könnte auch das Zertifikatsmanagementprotokoll CMC (Certificate Management over CMS) verwendet werden.

Ein System zur sicheren Zeitsynchronisation in einer industriellen Anlage gemäß einem zweiten Aspekt der Erfindung weist einen Registrierungsdienst zum Zertifikatsmanagement auf, der dazu eingerichtet ist, einen Zertifikatsantrag einer Anlagenkomponente zu prüfen. Erfindungsgemäß ist der Registrierungsdienst ferner dazu eingerichtet, eine Synchronisierungsanfrage von der Anlagenkomponente zu empfangen, wobei die Synchronisierungsanfrage eine Signatur der anfragenden Anlagenkomponente umfasst, und, insbesondere auf deren Authentizität, zu prüfen und in Abhängigkeit eines Ergebnisses der Prüfung eine Synchronisierungsrückmeldung an die anfragende Anlagenkomponente zu übermitteln, anhand der eine Systemzeit der Anlagenkomponente an eine Systemzeit des Registrierungsdiensts anpassbar ist.

Die bisher gegebene Beschreibung bevorzugter Ausführungsformen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem System gemäß dem ersten Aspekt der Erfindung und dem Verfahren gemäß dem zweiten Aspekt der Erfindung kombinierbar.

Die voranstehend beschriebenen Eigenschaften, Merkmale und Vorteile der Erfindung sowie die Art und Weise, wie diese erreicht werden, werden im Zusammenhang mit der folgenden Beschreibung von Ausführungsbeispielen der Erfindung, die im Zusammenhang mit den Figuren näher erläutert. In den Figuren werden durchgängig dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale der Ausführungsbeispiele auch explizit isoliert betrachtet und mit einem beliebigen der Ansprüche kombiniert werden.

Es zeigen, zumindest teilweise schematisch:
- FIG 1: ein Beispiel eines Verfahrens zum Zertifikatsmanagement, das ein Verfahren zur Zeitsynchronisation umfasst;
- FIG 2: ein Beispiel eines Verfahrens zur Zeitsynchronisation;
- FIG 3: ein Beispiel eines Systems zur Zeitsynchronisation; und
- FIG 4: ein Beispiel einer Nachricht gemäß dem Zertifikatsmanagementprotokoll CMP.

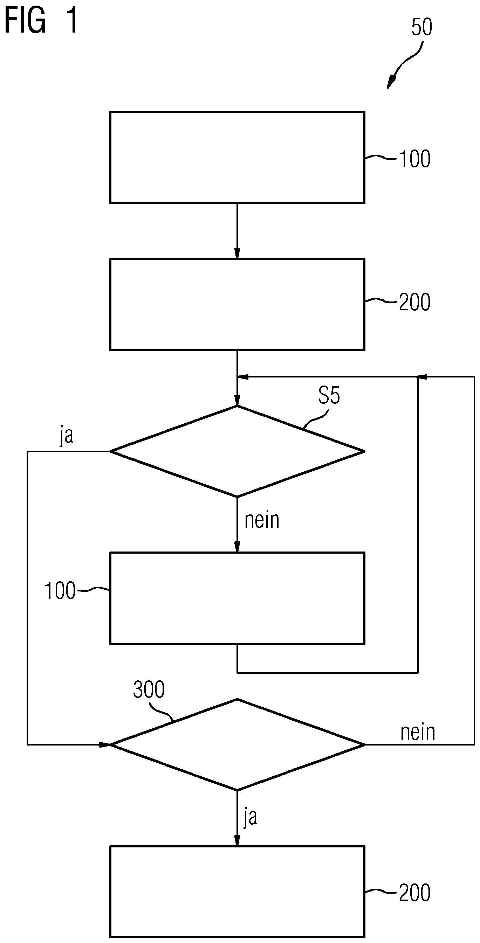

**FIG 1** zeigt ein Beispiel eines Verfahrens 50 zum Zertifikatsmanagement in einer industriellen Anlage. Dabei umfasst das Verfahren 50 auch wenigstens ein, im vorliegenden Beispiel zwei, Verfahren 100 zur Zeitsynchronisation in der industriellen Anlage.

Zunächst wird dabei das Verfahren 100 zur Zeitsynchronisation ausgeführt. Dabei werden erstmalig die Systemzeiten von einem Registrierungsdienst des Zertifikatsmanagements, der zum Beispiel zum Prüfen von Zertifikatsanträgen eingerichtet ist, und von einer Anlagenkomponente synchronisiert, um es der Anlagenkomponente zu ermöglichen, im Verfahrensschritt 200 erstmalig ein Zertifikat zu beantragen. Ein solches erstmaliges Beantragen eines Zertifikats entspricht einer Initialisierung der Anlagenkomponente, zum Beispiel nachdem sie neu in die Anlage integriert wurde, und wird auch als Bootstrapping bezeichnet.

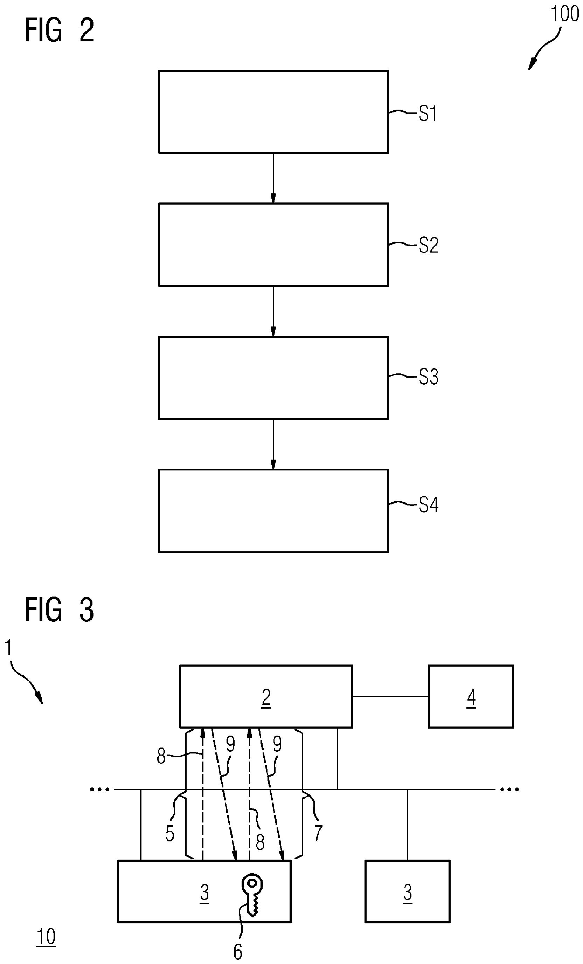

Das Verfahren 100 zur Zeitsynchronisation umfasst dabei (i) das Übermitteln einer Synchronisierungsanfrage von der Anlagenkomponente an den Registrierungsdienst, (ii) das Überprüfen der Synchronisierungsanfrage durch den Registrierungsdienst, (iii) das Übermitteln einer Synchronisierungsrückmeldung an die anfragende Anlagenkomponente in Abhängigkeit eines Ergebnisses der Prüfung sowie (iv) das Anpassen der Systemzeit der Anlagenkomponente an die Systemzeit des Registrierungsdiensts auf Grundlage der Synchronisierungsrückmeldung. Die Details dieses Verfahrens 100 werden im Zusammenhang mit FIG 2 erläutert.

Nachdem die Systemzeiten derart synchronisiert wurden, kann das Zertifikat in Verfahrensschritt 200 beantragt werden. Der Verfahrensschritt 200 kann dabei mehrere Unterschritte umfassen, wie beispielsweise (i) das Übermitteln eines Zertifikatsantrags an den Registrierungsdienst, (ii) das Prüfen des Zertifikatsantrags durch den Registrierungsdienst und (iii) das Ausstellen eines Zertifikats für die antragstellende Anlagenkomponente durch einen Zertifizierungsdienst des Zertifikatsmanagements in Abhängigkeit eines Ergebnisses der Prüfung. Der Ablauf der Unterschritte des Verfahrensschritts 200, d. h. des Bootstrappings, kann damit in den Grundzügen dem Ablauf des Verfahrens 100 zur Zeitsynchronisation entsprechen.

Im Betrieb der industriellen Anlage kann eine Erneuerung des im Verfahrensschritt 200 ausgestellten Zertifikats bzw. eines ihm zugeordneten Schlüssels vorgesehen sein oder notwendig werden, zum Beispiel um einen Missbrauch von Zertifikaten bzw. Schlüsseln zu verhindern oder zumindest zu erschweren. Auch hierbei sollte die Synchronizität der Systemzeiten von Registrierungsdienst und Anlagenkomponente gegeben sein. Daher kann in einem Verfahrensschritt S5 nach der (erstmaligen) Zertifikatsbeantragung die Synchronizität der Systemzeiten überprüft werden.

Zu diesem Zweck übermittelt die Anlagenkomponente in bevorzugter Weise eine Prüfanfrage an den Registrierungsdienst, worauf dieser mit einer Prüfrückmeldung antwortet. Die Prüfrückmeldung kann zum Beispiel einen Zeitstempel der Systemzeit des Registrierungsdiensts enthalten, der den Zeitpunkt angibt, zu dem die Prüfrückmeldung an die Anlagenkomponente abgesandt wurde. Bei Kenntnis der Übermittlungsdauer der Prüfrückmeldung kann dann die Synchronizität anhand der Prüfrückmeldung überprüft werden.

Die Übermittlungsdauer kann dabei gegebenenfalls ermittelt werden, indem weitere Zeitstempel berücksichtigt werden. Zum Beispiel können die Absendezeitpunkte der Prüfanfrage und Prüfrückmeldung mit den Empfangszeitpunkten der Prüfanfrage und Prüfrückmeldung in Beziehung gesetzt und die sich daraus ergebenden zwei Übermittlungsdauern gemittelt werden, um eine von der Synchronizität der beiden Systemzeiten unabhängige (mittlere) Übermittlungsdauer zu erhalten.

Übersteigt die Zeitabweichung zwischen den beiden Systemzeiten einen vorgegebenen Abweichungsschwellenwert, wird das Verfahren 100 zur Zeitsynchronisation erneut ausgeführt und die Synchronizität gegebenenfalls erneut geprüft.

Es ist dabei denkbar, den Verfahrensschritt S5 in regelmäßigen, vorgegebenen Zeitintervallen durchzuführen, insbesondere unabhängig davon, ob im Anschluss daran eine Zertifikatserneuerung durchgeführt werden soll. Daher kann es, wie im vorliegenden Beispiel dargestellt, vorgesehen sein, nach der Feststellung der Synchronizität der Systemzeiten des Registrierungsdiensts der Anlagenkomponente zu prüfen, ob eine Zertifikats- bzw. Schlüsselerneuerung ansteht. Diese Prüfung wird im Verfahrensschritt 300 durchgeführt. In Abhängigkeit eines Ergebnisses der Prüfung, insbesondere wenn eine solche Erneuerung notwendig ist, kann erneut der Verfahrensschritt 200 zur Zertifikatsbeantragung durchgeführt werden. Andernfalls kann, insbesondere nach dem vorgegebenen Zeitintervall, wieder Verfahrensschritt S5 durchgeführt werden.

Alternativ zu dem in FIG 1 dargestellten Ablauf ist es auch möglich, die Synchronizität der Systemzeiten des Registrierungsdiensts und der Anlagenkomponente im Rahmen des Verfahrens 100 zur Zeitsynchronisation zu prüfen und eine Anpassung der Systemzeit der Anlagenkomponente an die Systemzeit des Registrierungsdiensts nur dann vorzunehmen, wenn die beiden Systemzeiten zu stark voneinander abweichen, d. h. zum Beispiel die Zeitabweichung zwischen den Systemzeiten den Abweichungsschwellenwert erreicht oder überschreitet.

Ebenso ist es auch denkbar, das Verfahren 100 zur Zeitsynchronisation standardmäßig vor der Erneuerung eines Zertifikats bzw. Schlüssels durchzuführen.

**FIG 2** zeigt ein Beispiel eines Verfahrens 100 zur Zeitsynchronisation in einer industriellen Anlage.

In einem Verfahrensschritt S1 wird eine Synchronisierungsanfrage von einer Anlagenkomponente an einen Registrierungsdienst eines Zertifikatsmanagements übermittelt. Diese Synchronisierungsanfrage ist dabei vorzugsweise über ein Zertifikatsmanagementprotokoll, zum Beispiel CMP, gemäß dem auch Zertifikatsanträge übermittelt werden, definiert.

Das Übermitteln der Synchronisierungsanfrage umfasst dabei in bevorzugter Weise das sukzessive Senden von einer vordefinierten Anzahl von Anfragenachrichten, zum Beispiel sechs Anfragenachrichten. Dabei kann jede dieser Anfragenachrichten eine Signatur der anfragenden Anlagenkomponente enthalten, wobei die Signaturen von der Anlagenkomponente zum Beispiel mithilfe eines Schlüssels, der einem Herstellerzertifikat der Anlagenkomponente zugeordnet ist, erzeugt werden.

Dadurch können die Anfragenachrichten vom Registrierungsdienst im Verfahrensschritt S2 auf ihre Authentizität hin geprüft werden. Der Registrierungsdienst kann dabei beispielsweise ermitteln, ob eine oder mehrere der Anfragenachrichten während der Übermittlung manipuliert wurden. In diesem Fall wird die Synchronisierungsanfrage verworfen bzw. unbeantwortet gelassen.

Stellt sich im Rahmen der Prüfung jedoch die Authentizität der Anfragenachrichten heraus, übermittelt der Registrierungsdienst im Verfahrensschritt S3 für jede der (sukzessive übermittelten) Anfragenachrichten eine entsprechende Rückmeldenachricht an die anfragende Anlagenkomponente. Die Rückmeldenachrichten können dabei als Synchronisierungsrückmeldung aufgefasst werden.

Sowohl die Anfragenachrichten als auch die Rückmeldenachrichten können Zeitstempel der Systemzeit der Anlagenkomponente und/oder des Registrierungsdiensts enthalten. Dabei geben zumindest einige dieser Zeitstempel vorzugsweise einen Sendezeitpunkt, zu dem die Nachrichten abgesandt wurden, an. Andere dieser Zeitstempel können dagegen einen Empfangszeitpunkt, zu dem die Nachrichten empfangen wurden, angeben. Aus den in einer Anfragenachricht enthaltenen Zeitstempeln sowie den in einer darauffolgenden Rückmeldenachricht enthaltenen Zeitstempeln lässt sich somit eine (mittlere) Übermittlungsdauer (Delay) der Nachrichten ableiten sowie eine Zeitabweichung (Offset) zwischen den Systemzeiten des Registrierungsdiensts und der Anlagenkomponente.

Dadurch, dass vorzugsweise mehrere dieser Nachrichten (sukzessive) übermittelt werden, können die jeweils abgeleiteten Übermittlungsdauern sowie die jeweils abgeleiteten Zeitabweichungen über die Anzahl der (paarweise) übermittelten Nachrichten gemittelt werden. Darauf basierend kann in einem Verfahrensschritt S4 die Systemzeit der Anlagenkomponente an die Systemzeit des Registrierungsdiensts angepasst werden.

**FIG 3** zeigt ein Beispiel eines Systems 1 zur Zeitsynchronisation in einer industriellen Anlage 10. Das System 1 weist einen Registrierungsdienst 2 auf, der vorzugsweise Teil eines Zertifikatsmanagements ist. Der Registrierungsdienst 2 kann beispielsweise dazu eingerichtet sein, einen Zertifikatsantrag einer von mehreren Anlagenkomponenten 3 zu prüfen, etwa auf Authentizität, und in Abhängigkeit eines Ergebnisses in Prüfung an einen Zertifizierungsdienst 4 weiterzuleiten. Der Zertifizierungsdienst 4 kann der antragstellenden Anlagenkomponente 3 dann ein entsprechendes Zertifikat ausstellen, auf dessen Grundlage die Kommunikation mit anderen Anlagenkomponenten 3 möglich ist.

Der Registrierungsdienst 2 ist darüber hinaus in bevorzugter Weise auch dazu eingerichtet, eine Synchronisierungsanfrage 5 zur Zeitsynchronisation von einer Anlagenkomponente 3 zu empfangen und, zumindest im Wesentlichen analog zu einem Zertifikatsantrags, zu prüfen. Zu diesem Zweck kann die Synchronisierungsanfrage 5 eine Signatur der anfragenden Anlagenkomponente 3 enthalten, die zum Beispiel auf einem in der Anlagenkomponente 3, etwa in einem Speicher der Anlagenkomponente 3, hinterlegten Schlüssel 6 basiert. Der Registrierungsdienst 2 kann entsprechend dazu eingerichtet sein, anhand der Signatur über die Authentizität der Synchronisierungsanfrage 5 zu entscheiden.

Ermittelt der Registrierungsdienst 2, dass die Synchronisierungsanfrage 5 authentisch bzw. zulässig ist, sendet er in bevorzugter Weise eine Synchronisierungsrückmeldung 7 an die Anlagenkomponente 3, auf deren Grundlage die Anlagenkomponente 3 ihre Systemzeit an eine Systemzeit des Registrierungsdiensts 2 anpassen kann. Zu diesem Zweck kann die Synchronisierungsrückmeldung 7 beispielsweise Informationen bezüglich der Zeitpunkte enthalten, zu denen die Synchronisierungsanfrage 5 versandt und/oder empfangen sowie die Synchronisierungsrückmeldung 7 abgesendet wurde, etwa in Form von Zeitstempeln der Systemzeiten der Anlagenkomponente 3 bzw. des Registrierungsdiensts 2.

Um die Präzision der Zeitsynchronisation zu erhöhen, umfasst diese Synchronisierungsanfrage 5 vorzugsweise eine vordefinierte Anzahl an Anfragenachrichten 8, auf welche der Registrierungsdienst 2 jeweils eine entsprechende Rückmeldenachricht 9 versendet. Die Rückmeldenachrichten 9 werden von der Synchronisierungsrückmeldung 7 umfasst.

Die Synchronisierungsanfrage 5 und -rückmeldung 7 umfassen, wie in FIG 3 rein beispielhaft gezeigt, jeweils zwei Anfrage- bzw. Rückmeldenachrichten 8, 9, die als gestrichelte Pfeile dargestellt sind. Die Nachrichten 8, 9 werden dabei vorzugsweise sukzessive bzw. sequenziell übermittelt, insbesondere innerhalb einer vorgegebenen Zeitdauer. Durch die Berücksichtigung mehrerer Rückmeldenachrichten 9 bzw. der darin enthaltenen Information bezüglich einer Übermittlungsdauer (Delay) der Nachrichten 8, 9 und/oder der Zeitabweichung (Offset) zwischen den Systemzeiten des Registrierungsdiensts 2 und der Anlagenkomponente 3 können, etwa anhand einer Mittelung, die Auswirkungen von zeitlich begrenzten Beeinträchtigungen bzw. einer Bandbreitenbegrenzung des Kommunikationsnetzes der Anlage 10 auf die Zeitsynchronisation kompensiert oder zumindest verringert werden. Es hat sich dabei gezeigt, dass jeweils sechs Anfrage- und Rückmeldenachrichten 8, 9 vorteilhaft bezüglich Zeitdauer und Präzision des Synchronisierungsverfahrens sind.

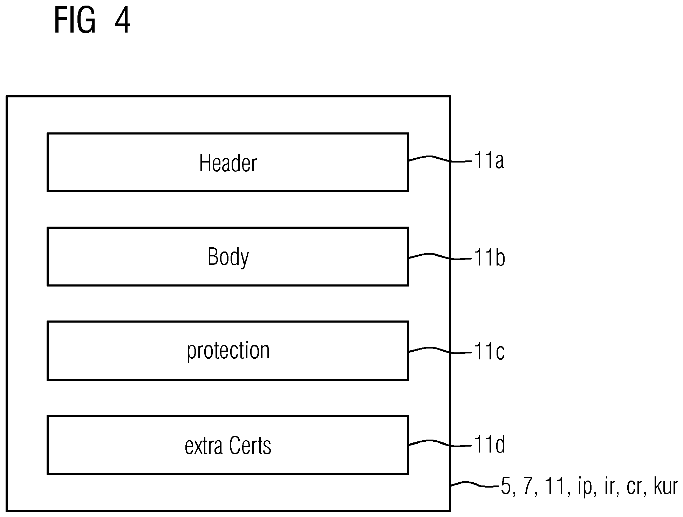

**FIG 4** zeigt ein Beispiel einer Nachricht 11, die gemäß dem Zertifikatsmanagementprotokoll CMP aufgebaut ist. Auf Grundlage dieser Struktur können verschiedene Nachrichtentypen definiert sein. Solche Nachrichten 11 werden beispielsweise als Zertifikatsantrag von Anlagenkomponenten an einen Registrierungsdienst versandt. Vorteilhaft können solche Nachrichten 11 aber auch zum Beispiel als Synchronisierungsanfrage 5 oder Synchronisierungsrückmeldung 7 zwischen einer Anlagenkomponente und dem Registrierungsdienst übermittelt werden, um eine Systemzeit der Anlagenkomponente an eine Systemzeit des Registrierungsdienst anzupassen. Synchronisierungsanfrage 5 und Synchronisierungsrückmeldung 7 bilden dabei jeweils einen (neu) definierten Nachrichtentyp. Ein auf CMP basierendes Zertifikatsmanagementprotokoll, in dem diese beiden Nachrichtentypen definiert sind, wird deswegen auch als modifiziertes CMP bezeichnet.

Eine CMP-Nachricht 11 weist standardmäßig vier verschiedene Felder auf, die mit "header 11a", "body 11b", "protection 11c" und "extraCerts 11d" bezeichnet werden.

Gemäß dem CMP-Standard RFC 4210 erhält eine Anlagenkomponente nach der Übermittlung eines Zertifikatsantrags eine Rückmeldung ("initialization response", ip) vom Registrierungsdienst (oder einem mit dem Registrierungsdienst verbundenen Zertifizierungsdienst). Es kann sich dabei verschiedene Typen von Zertifikatsanträgen handeln, zum Beispiel um einen initialen Zertifikatsantrag, der auch als "initialization request" (ir) bezeichnet wird. Ein anderer Zertifikatsantrag wird zum Beispiel zur Zertifikatserneuerung unter Verwendung des gleichen Schlüssels ("certification request", cr) oder zur Zertifikatserneuerung mit Schlüsselerneuerung ("key request", kur) gestellt.

Die Nachrichten für Zertifikatsantrag ir, cr, kur und Rückmeldung ip unterscheiden sich dabei im Feld body 11b, um jeweils die betreffende Information übermitteln zu können. Das Feld body 11b einer Synchronisierungsanfrage 5 und -rückmeldung 7 ist vorzugsweise im Wesentlichen zum Feld body 11b des Zertifikatsantrags ir, cr, kur bzw. der Rückmeldung ip ausgebildet, enthält aber zusätzliche Information, die eine Zeitsynchronisation ermöglicht.

Das Feld body 11b einer Synchronisierungsanfrage 5 kann beispielsweise (zusätzlich) einen Zeitstempel der Systemzeit der anfragenden Anlagenkomponente, welche den Sendezeitpunkt der Anfrage 5 angibt, enthalten. Insbesondere kann auch Informationen bezüglich einer vordefinierten Anzahl zu übermittelnder Anfragenachrichten enthalten sein (vgl. FIG 3). Vorzugsweise ist zumindest ein Teil des Felds body 11b der Synchronisierungsanfrage 5 gemäß dem Synchronisierungsstandard NTP (RFC 1129) definiert.

Das Feld body 11b einer Synchronisierungsrückmeldung 7 kann dagegen beispielsweise (zusätzlich) Zeitstempel der Systemzeit der anfragenden Anlagenkomponente sowie des Registrierungsdiensts, welche den Sendezeitpunkt und den Empfangszeitpunkt der Synchronisierungsanfrage 5 sowie den Sendezeitpunkt der Rückmeldung 7 angeben, enthalten. Insbesondere kann auch Information bezüglich einer vordefinierten Anzahl zu übermittelnder Rückmeldenachrichten enthalten sein (vgl. FIG 3). Auch hierbei ist vorzugsweise zumindest ein Teil des Felds body 11b der Synchronisierungsrückmeldung 7 gemäß dem Synchronisierungsstandard NTP (RFC 1129) definiert.

Das Feld protection 11c enthält üblicherweise Information bezüglich einer Signatur, mit der die Nachricht zu signieren ist. Um die Kommunikation zwischen Anlagenkomponente und Registrierungsdienst bei der Zeitsynchronisation abzusichern, ist diese Information bzw. eine Signatur der Synchronisierungsanfrage 5 und -rückmeldung 7 in bevorzugter Weise obligatorisch.

Der Inhalt der Felder header 11a und extraCerts 11d ist für die verschiedenen Nachrichtentypen üblicherweise gleich.

## Patentansprüche

1. Verfahren (100) zur sicheren Zeitsynchronisation in einer industriellen Anlage (10), aufweisend die Schritte:
- Übermitteln (S1) einer Synchronisierungsanfrage (5) einer Anlagenkomponente (3) an einen Registrierungsdienst (2) eines Zertifikatsmanagements der Anlage (10), wobei die Synchronisierungsanfrage eine Signatur der anfragenden Anlagenkomponente (3) umfasst;
- Prüfen (S2) der Synchronisierungsanfrage (5) durch den Registrierungsdienst (2);
- Übermitteln (S3) einer Synchronisierungsrückmeldung (7) an die anfragende Anlagenkomponente (3) in Abhängigkeit eines Ergebnisses der Prüfung; und
- Anpassen (S4) einer Systemzeit der Anlagenkomponente (3) an eine Systemzeit des Registrierungsdiensts (2) anhand der Synchronisierungsrückmeldung (7).

2. Verfahren (100) nach Anspruch 1,
**dadurch gekennzeichnet,**
**dass** die anfragende Anlagenkomponente (3) die Signatur mithilfe eines Schlüssels (6) aus einer Public-Key-Infrastruktur erzeugt.

3. Verfahren (100) nach einem der vorangehenden Ansprüche,
**dadurch gekennzeichnet,**
**dass** bei einer erstmaligen Synchronisierungsanfrage (5) eine vordefinierte Anzahl an Anfragenachrichten (8) und bei einer entsprechenden Synchronisierungsrückmeldung (7) eine entsprechende Anzahl an Rückmeldenachrichten (9) übermittelt wird.

4. Verfahren (100) nach Anspruch 3,
**dadurch gekennzeichnet,**
**dass** die erstmalige Synchronisierung bei Inbetriebnahme der Anlagenkomponente (3) innerhalb der industriellen Anlage (10) angefragt wird.

5. Verfahren (100) nach einem der Ansprüche 3 oder 4,
**dadurch gekennzeichnet,**
**dass** die Anfragenachrichten (8) jeweils eine Signatur der anfragenden Anlagenkomponente (3) umfassen, wobei die anfragende Anlagenkomponente (3) die Signaturen mithilfe eines einem Herstellergerätezertifikat oder einem Kundengerätezertifikat zugeordneten Schlüssels (6) erzeugt.

6. Verfahren (100) nach einem der Ansprüche 3 bis 5,
**dadurch gekennzeichnet,**
**dass** die vordefinierte Anzahl an Anfragenachrichten (8) innerhalb eines vordefinierten Zeitraums an den Registrierungsdienst (2) übermittelt wird.

7. Verfahren (100) nach einem der vorangehenden Ansprüche,
**dadurch gekennzeichnet,**
**dass** bei einer erneuten Synchronisierungsanfrage (5) genau eine Anfragenachricht (8) und bei einer entsprechenden Synchronisierungsrückmeldung (7) genau eine Rückmeldenachricht (9) übermittelt wird.

8. Verfahren (100) nach Anspruch 7,
**dadurch gekennzeichnet,**
**dass** die Anfragenachricht (8) eine Signatur umfasst, wobei die anfragende Anlagenkomponente (3) die Signatur mithilfe eines einem zuletzt ausgestellten operativen Zertifikat zugeordneten privaten Schlüssels (6) erzeugt.

9. Verfahren (100) nach einem der vorangehenden Ansprüche,
**dadurch gekennzeichnet,**
**dass** die Synchronisierungsanfrage (5) erneut vor dem Stellen eines Zertifikaterneuerungsantrags durch die Anlagenkomponente (3) bei einem Zertifizierungsdienst (4) an den Registrierungsdienst (2) übermittelt wird.

10. Verfahren (100) nach Anspruch 9,
**dadurch gekennzeichnet,**
**dass** zunächst geprüft wird, ob die Systemzeit des Registrierungsdiensts (2) und die Systemzeit der Anlagenkomponente (3) synchronisiert sind, wobei die Systemzeit der Anlagenkomponente (3) an die Systemzeit des Registrierungsdiensts (2) in Abhängigkeit eines Ergebnisses der Prüfung angepasst wird.

11. Verfahren (100) nach einem der vorangehenden Ansprüche,
**dadurch gekennzeichnet,**
**dass** die Synchronisierungsanfrage (5) und die Synchronisierungsrückmeldung (7) gemäß dem Zertifikatsmanagementprotokoll CMP oder CMC übermittelt werden.

12. System (1) zur sicheren Zeitsynchronisation in einer industriellen Anlage (10), aufweisend einen Registrierungsdienst (2) zum Zertifikatsmanagement, der dazu eingerichtet ist, einen Zertifikatsantrag (ir, cr, kur) einer Anlagenkomponente (3) zu prüfen,
**dadurch gekennzeichnet,**
**dass** der Registrierungsdienst (2) ferner dazu eingerichtet ist, eine Synchronisierungsanfrage (5) von der Anlagenkomponente (3) zu empfangen, wobei die Synchronisierungsanfrage (5) eine Signatur der anfragenden Anlagenkomponente (3) umfasst, und zu prüfen und in Abhängigkeit eines Ergebnisses der Prüfung eine Synchronisierungsrückmeldung (7) an die anfragende Anlagenkomponente (3) zu übermitteln, anhand der eine Systemzeit der Anlagenkomponente (3) an eine Systemzeit des Registrierungsdiensts (2) anpassbar ist.

## Claims

1. A method (100) for secure time synchronization in an industrial plant (10), having the steps:
- transmitting (S1) a synchronization request (5) of a plant component (3) to a registration authority (2) of a certificate management of the plant (10), wherein the synchronization request (5) comprises a signature of the requesting plant component (3);
- checking (S2) the synchronization request (5) by way of the registration authority (2);
- transmitting (S3) a synchronization response (7) to the requesting plant component (3) as a function of a result of the check; and
- adapting (S4) a system time of the plant component (3) to a system time of the registration authority (2) on the basis of the synchronization response (7).

2. The method (100) as claimed in claim 1,
**characterized in that**
the requesting plant component (3) generates the signature with the aid of a key (6) from a Public Key Infrastructure.

3. The method (100) as claimed in one of the preceding claims,
**characterized in that**
in the event of a synchronization request (5) for the first time, a predefined number of request messages (8) is transmitted and, in the event of a corresponding synchronization response (7), a corresponding number of response messages (9) is transmitted.

4. The method (100) as claimed in claim 3,
**characterized in that**
the synchronization for the first time is requested during commissioning of the plant component (3) within the industrial plant (10).

5. The method (100) as claimed in one of claims 3 or 4,
**characterized in that**
the request messages (8) each comprise a signature of the requesting plant component (3), wherein the requesting plant component (3) generates the signatures with the aid of a key (6) assigned to a manufacturer device certificate or a customer device certificate.

6. The method (100) as claimed in one of claims 3 to 5,
**characterized in that**
the predefined number of request messages (8) is transmitted to the registration authority (2) within a predefined period of time.

7. The method (100) as claimed in one of the preceding claims,
**characterized in that**
in the event of a renewed synchronization request (5), precisely one response message (8) is transmitted and, in the event of a corresponding synchronization response (7), precisely one response message (9) is transmitted.

8. The method (100) as claimed in claim 7,
**characterized in that**
the request message (8) comprises a signature, wherein the requesting plant component (3) generates the signature with the aid of a private key (6) assigned to an operational certificate most recently issued.

9. The method (100) as claimed in one of the preceding claims,
**characterized in that**
the synchronization request (5) is transmitted to the registration authority (2) once more, before the plant component (3) makes a certificate renewal application to a certification authority (4).

10. The method (100) as claimed in claim 9,
**characterized in that**
it is first checked whether the system time of the registration authority (2) and the system time of the plant component (3) are synchronized, wherein the system time of the plant component (3) is adapted to the system time of the registration authority (2) as a function of a result of the check.

11. The method (100) as claimed in one of the preceding claims,
**characterized in that**
the synchronization request (5) and the synchronization response (7) are transmitted in accordance with the certificate management protocol CMP or CMC.

12. A system (1) for secure time synchronization in an industrial plant (10), having a registration authority (2) for certificate management, which is configured to check a certificate application (ir, cr, kur) of a plant component (3),
**characterized in that**
the registration authority (2) is furthermore configured to receive a synchronization request (5) from the plant component (3), wherein the synchronization request (5) comprises a signature of the requesting plant component (3), and to check it, and to transmit a synchronization response (7) to the requesting plant component (3) as a function of a result of the check, on the basis of which synchronization response a system time of the plant component (3) can be adapted to a system time of the registration authority (2).

## Revendications

1. Procédé (100) de synchronisation temporelle sécurisée dans une installation (10) industrielle, comportant les stades :
- transmission (S1) d'une demande (5) de synchronisation d'un composant (3) de l'installation à un service (2) d'enregistrement d'une gestion de certificat de l'installation (10), la demande de synchronisation comprenant une signature du composant (3) de l'installation demandeur ;
- contrôle (S2) de la demande (5) de synchronisation par le service (2) d'enregistrement ;
- transmission (S3) d'un accusé (7) de réception de synchronisation au composant (3) de l'installation demandeur, en fonction d'un résultat du contrôle ; et
- adaptation (S4) d'un temps de système du composant (3) de l'installation à un temps de système du service (2) d'enregistrement, à l'aide de l'accusé (7) de réception de synchronisation.

2. Procédé (100) suivant la revendication 1,
**caractérisé en ce que**
le composant (3) de l'installation demandeur produit la signature à l'aide d'une clé (6) d'une infrastructure Public-Key.

3. Procédé (100) suivant l'une des revendications précédentes,
**caractérisé en ce que**,
lors d'une demande (5) de synchronisation pour la première fois, on transmet un nombre défini à l'avance de messages (8) de demande et lors d'un accusé (7) de réception de synchronisation correspondant, on transmet un nombre correspondant de messages (9) d'accusé de réception.

4. Procédé (100) suivant la revendication 3,
**caractérisé en ce que**
l'on demande la synchronisation pour la première fois, lors de la mise en fonctionnement du composant (3) de l'installation dans l'installation (10) industrielle.

5. Procédé (100) suivant l'une des revendications 3 ou 4,
**caractérisé en ce que**
les messages (8) de demande comprennent respectivement une signature du composant (3) de l'installation demandeur, dans lequel le composant (3) de l'installation demandeur produit les signatures, à l'aide d'une clé (6) associée à un certificat d'appareil de fabrication ou à un certificat d'appareil de client.

6. Procédé (100) suivant l'une des revendications 3 à 5,
**caractérisé en ce que**
l'on transmet, au service (2) d'enregistrement, le nombre défini à l'avance de messages (8) de demande dans un laps de temps défini à l'avance.

7. Procédé (100) suivant l'une des revendications précédentes,
**caractérisé en ce que**
lors d'une demande (5) de synchronisation renouvelée, on transmet exactement un message (8) de demande, et lors d'un accusé (7) de réception de synchronisation correspondant, on transmet exactement un message (9) d'accusé de réception.

8. Procédé (100) suivant la revendication 7,
**caractérisé en ce que**
le message (8) de demande comprend une signature, dans lequel le composant (3) de l'installation demandeur produit la signature, à l'aide d'une clé (6) privée associée à un certificat opératoire établi en dernier.

9. Procédé (100) suivant l'une des revendications précédentes,
**caractérisé en ce que**
l'on transmet, au service (2) d'enregistrement, lors d'un service (4) de certification, la demande (5) de synchronisation avant l'établissement d'une demande de renouvellement de certificat par le composant (3) de l'installation.

10. Procédé (100) suivant la revendication 9,
**caractérisé en ce que**
l'on contrôle d'abord si le temps de système du service (2) d'enregistrement et le temps de système du composant (3) de l'installation sont synchronisés, dans lequel on adapte le temps de système du composant (3) de l'installation au temps de système du service (2) d'enregistrement, en fonction d'un résultat du contrôle.

11. Procédé (100) suivant l'une des revendications précédentes,
**caractérisé en ce que**
l'on transmet, suivant le protocole de gestion de certificat CMP ou CMC, la demande (5) de synchronisation et l'accusé (7) de réception de synchronisation.

12. Système (1) de synchronisation temporelle sécurisée dans une installation (10) industrielle, comportant un service (2) d'enregistrement pour la gestion de certificat, qui est conçu pour contrôler une demande (ir, cr, kur) de certification d'un composant (3) de l'installation, **caractérisé en ce que**
le service (2) d'enregistrement est conçu en outre pour recevoir une demande (5) de synchronisation du composant (3) de l'installation, dans lequel la demande (5) de synchronisation comprend une signature du composant (3) de l'installation demandeur, et pour contrôler et, en fonction d'un résultat du contrôle, pour transmettre un accusé (7) de réception de synchronisation au composant (3) de l'installation demandeur, à l'aide duquel un temps de système du composant (3) de l'installation peut être adapté à un temps de système du service (2) d'enregistrement.
